# EUROPÄISCHE PATENTANMELDUNG

(11) **EP 2 647 660 A1**
(43) Veröffentlichungstag der Anmeldung: **09.10.2013**
(21) Anmeldenummer: 12162819.2
(22) Anmeldetag: 02.04.2012
(51) Int. Cl.: C08J 7/04, E04D 5/06, E04D 5/10

(54) **PVC-Membran mit verringerter Weichmachermigration**

(71) Anmelder: Sika Technology AG, 6340 Baar (CH)
(72) Erfinder: Jendoubi, Elyes, 8052 Zürich (CH); Kerber, Carine, 6060 Sarnen (CH)
(74) Vertreter: Sika Patent Attorneys

(57) **Zusammenfassung**

Die vorliegende Erfindung betrifft eine Membran umfassend eine Schottschicht, wobei die Schottschicht zu mehr als 50 Gew-% aus PVC besteht, und eine Sperrschicht. Bei der Sperrschicht kann es sich einerseits um eine Sperrschicht **S1** handeln, wobei die Sperrschicht **S1** eine Polyvinylalkohol-Schicht umfassend mehr als 50 Gew-% Co-Polymer **PA** aufweist, welche mit der Schottschicht durch eine Polyurethan-Schicht verbunden ist, wobei die Polyurethan-Schicht zu mehr als 10 Gew-% aus Polyurethan **PUR** besteht. Bei der Sperrschicht kann es sich andererseits um eine Sperrschicht **S2** handeln, wobei die Sperrschicht **S2** aus einer Zusammensetzung umfassend 5-50 Gew.-% Polyurethan **PUR** und 50-95 Gew.-% Co-Polymer **PA** besteht.

Die erfindungsgemässen Membranen weisen eine signifikant tiefere Weichmachermigration gegenüber den Membranen des Standes der Technik auf und zeichnen sich durch eine verbesserte Alterungsbeständigkeit, insbesondere in Bezug auf die Haftung der Sperrschicht auf der Schottschicht, und Dichtheit gegen Feuchtigkeit aus.

## Beschreibung

### Technisches Gebiet

Die Erfindung betrifft das Gebiet der Abdichtungen im Baubereich, insbesondere der Dachabdeckungen.

### Stand der Technik

Für Abdichtungen im Baubereich, insbesondere der Dachabdeckungen, ist PVC als Bestandteil der Abdichtungsbahnen ein wichtiger Bestandteil. Um die Verarbeitbarkeit von PVC zu steuern werden seit langem Weichmacher verwendet. Diese Weichmacher weisen jedoch den grossen Nachteil auf, dass sie migrieren. Das heisst, dass die Weichmacher mit der Zeit einerseits an die Oberfläche wandern und dort zu Oberflächenklebrigkeit führen, oder sie migrieren in den Träger, welcher sie mit einem Untergrund verbindet. Die Migration wird erfahrungsgemäss durch hohe Temperaturen noch verstärkt, wie sie beispielsweise durch Sonneneinstrahlung hervorgerufen werden.

Weiterhin durch die Migration bedingt, verarmt somit die PVC-Bahn an Weichmacher, wodurch ihre Elastizität mit der Zeit stark nachlässt, so dass die Bahnen verspröden, was früher oder später zu Rissen führt. Somit führt die Migration des Weichmachers dazu, dass die für eine PVC-Bahn wesentlichen Eigenschaften, nämlich die Abdichtung gegen Feuchtigkeit, Flexibilität und Alterungsbeständigkeit verloren gehen.

### Darstellung der Erfindung

Die Aufgabe der vorliegenden Erfindung ist es daher, Abdichtungsmembranen zur Verfügung zu stellen, welche die vorgehend genannten Nachteile nicht aufweisen.

Überraschenderweise wurde gefunden, dass eine Membran gemäss Anspruch 1 diese Aufgabe löst.

Kern der Erfindung ist daher eine Membran 1 umfassend eine Schottschicht 2, wobei die Schottschicht zu mehr als 50 Gew-% aus PVC besteht, bezogen auf das Gesamtgewicht der Schottschicht, und eine Sperrschicht 3. Bei der Sperrschicht 3 kann es sich entweder um eine Sperrschicht **S1** 31 oder um eine Sperrschicht **S2** 32 handeln.

Im Falle einer Sperrschicht **S1** 31 handelt es sich um eine Sperrschicht, welche eine Polyvinylalkohol-Schicht 4 umfassend mehr als 50 Gew-% Co-Polymer **PA**, bezogen auf das Gesamtgewicht der Polyvinylalkohol-Schicht 4, aufweist, welche mit der Schottschicht 2 durch eine Polyurethan-Schicht 5 verbunden ist, wobei die Polyurethan-Schicht 5 zu mehr als 10 Gew-% aus Polyurethan **PUR** besteht, bezogen auf das Gesamtgewicht der Polyurethan-Schicht 5.

Im Falle einer Sperrschicht **S2** 32 handelt es sich um eine Sperrschicht bestehend aus einer Zusammensetzung umfassend 5-50 Gew.-% Polyurethan **PUR** und 50-95 Gew.-% Co-Polymer **PA**.

Das Polyurethan **PUR** weist mindestens eine nucleophile funktionelle Gruppe auf, welche ausgewählt ist aus der Gruppe bestehend aus Hydroxylgruppe, Carboxylgruppe, Sulfonatgruppe und Phosphatgruppe. Bei dem Co-Polymer **PA** handelt es sich um ein Ethylen-Vinylalkohol-Co-Polymer.

Die erfindungsgemässen Membranen weisen eine signifikant tiefere Weichmachermigration gegenüber den Membranen des Standes der Technik auf und zeichnen sich durch eine verbesserte Alterungsbeständigkeit, insbesondere in Bezug auf die Haftung der Sperrschicht 3 auf der Schottschicht 2, und Dichtheit gegen Feuchtigkeit aus.

Weitere Aspekte der Erfindung sind unter anderem Verfahren zu Herstellung von vorgehend genannten Membranen und Gegenstand weiterer unabhängiger Ansprüche. Besonders bevorzugte Ausführungsformen der Erfindung sind Gegenstand der abhängigen Ansprüche.

### Kurze Beschreibung der Zeichnungen

Im Folgenden wird die Erfindung mit Hilfe der Figuren näher beschrieben, wobei darauf hingewiesen wird, dass nur die für das unmittelbare Verständnis der Erfindung wesentlichen Elemente gezeigt sind. Gleiche Elemente sind in den verschiedenen Figuren mit gleichen Bezugszeichen gekennzeichnet. Weiterhin wird darauf hingewiesen, dass es sich bei den hier gezeigten Figuren um schematische Darstellungen ohne Grössenbezüge handelt.
Figur 1 zeigt einen Querschnitt durch eine erfindungsgemässe Membran.
Figur 2 zeigt einen Querschnitt durch eine weitere mögliche erfindungsgemässe Membran.

### Wege zur Ausführung der Erfindung

Die vorliegende Erfindung betrifft eine Membran 1 umfassend eine Schottschicht 2, wobei die Schottschicht zu mehr als 50 Gew-% aus PVC besteht, bezogen auf das Gesamtgewicht der Schottschicht, und eine Sperrschicht 3.

Die Schottschicht 2 besteht zu mehr als 50 Gew-% aus PVC, bezogen auf das Gesamtgewicht der Schottschicht. Vorzugswiese besteht die Schottschicht zu mehr als 70 Gew.-% aus PVC, bezogen auf das Gesamtgewicht der Schottschicht.

Um als Schottschicht möglichst geeignet zu sein, sollte sie möglichst wasserdicht sein und sich auch unter längerem Einfluss von Wasser, beziehungsweise Feuchtigkeit, nicht zersetzen oder mechanisch beschädigt werden. Als Schottschicht sind insbesondere derartige Folien geeignet, wie sie für Abdichtungszwecke im Hoch- und Tiefbau bereits im Stand der Technik eingesetzt werden. Die Schottschicht sollte vorteilhaft ein zumindest geringes Ausmass an Elastizität aufweisen, um beispielsweise durch Temperaturen verursachte Ausdehnungsunterschiede zwischen Abdichtungsmembran und Untergrund oder durch Risse im Untergrund verursachte Spannungen überbrücken zu können, ohne dass die Schottschicht beschädigt wird oder reisst und die Dichtfunktion der Schottschicht beieinträchtigen würde.

Weiter kann die Schottschicht 2 Materialien enthalten, welche als Verarbeitungshilfsmittel für PVC geeignet sind. Typischerweise sind solche Materialien ausgewählt aus der Gruppe bestehend aus Polyethylen mit hoher Dichte (HDPE), Polyethylen mit mittlerer Dichte (MDPE), Polyethylen mit tiefer Dichte (LDPE), Polyethylen (PE), Polypropylen (PP), Polyethylenterephthalat (PET), Polystyrol (PS), Ethylen-Vinylacetat (EVA), chlorsulfoniertes Polyethylen, thermoplastische Polyolefine (TPO), Ethylen-Propylen-DienKautschuk (EPDM) und Polyisobutylen (PIB) sowie Mischungen davon. Vorzugswiese besteht die Schottschicht 2 zu weniger als 5 Gew.-%, bevorzugt zu weniger als 1 Gew.-%, insbesondere bevorzugt zu weniger als 0.5 Gew.-%, aus vorgenannten Materialien, welche als Verarbeitungshilfsmittel für PVC geeignet sind, bezogen auf das Gesamtgewicht der Schottschicht.

Vorzugswiese weist die Schottschicht einen Anteil an Weichmacher von 20- 45 Gew.-%, insbesondere bevorzugt 30- 40 Gew.-%, bezogen auf das Gesamtgewicht der Schottschicht, auf.

Die eingesetzten Weichmacher sind typischerweise Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene.

Die Schottschicht weist vorteilhaft eine Schichtdicke im Millimeterbereich auf, typischerweise zwischen 0.2 und 15 mm, bevorzugt zwischen 0.5 und 4 mm.

Bei der Sperrschicht 3 kann es sich entweder um eine Sperrschicht **S1** 31 oder um eine Sperrschicht **S2** 32 handeln.

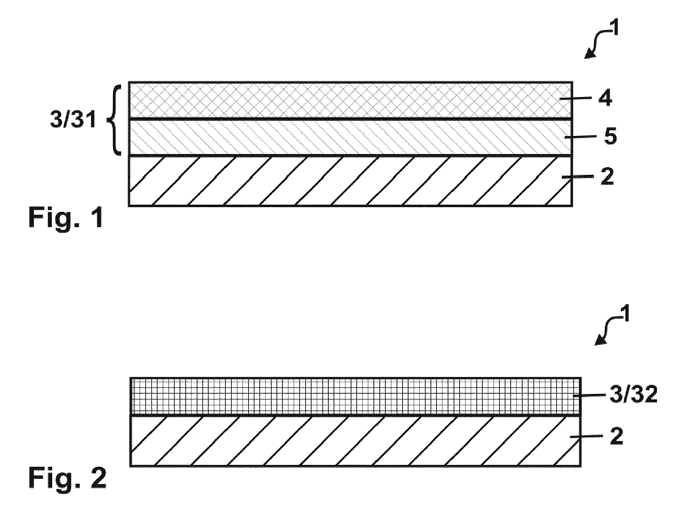

Figur 1 zeigt einen Querschnitt durch eine mögliche erfindungsgemässe Membran, welche eine Sperrschicht **S1** 31 aufweist.

Die Sperrschicht **S1** 31 weist eine Polyvinylalkohol-Schicht 4 umfassend mehr als 50 Gew-% Co-Polymer **PA**, bezogen auf das Gesamtgewicht der Polyvinylalkohol-Schicht 4, auf, welche mit der Schottschicht 2 durch eine Polyurethan-Schicht 5 verbunden ist, wobei die Polyurethan-Schicht 5 zu mehr als 10 Gew-% aus Polyurethan **PUR** besteht, bezogen auf das Gesamtgewicht der Polyurethan-Schicht 5.

Die Polyvinylalkohol-Schicht 4 umfassend mehr als 50 Gew-% Co-Polymer **PA**, bezogen auf das Gesamtgewicht der Polyvinylalkohol-Schicht 4.

Bei dem Co-Polymer **PA** handelt es sich um ein Ethylen-Vinylalkohol-Co-Polymer.

Solche Ethylen-Vinylalkohol-Co-Polymere werden typischerweise erhalten durch Copolymerisation von Ethylen mit einem Vinylester-Monomer. Gegebenenfalls können weitere Monomere, typischerweise mit einer ungesättigten C-C-Doppelbindung, bei der Copolymerisation anwesend sein und einpolymerisiert werden. Nach Erhalt des entstandenen Co-Polymers wird ein Hydrolyseschritt durchgeführt.

Vorzugsweise handelt es sich um ein Ethylen-Vinylalkohol-Co-Polymer hergestellt durch Hydrolysieren eines Co-polymers erhalten durch Copolymerisation von Ethylen mit einem Vinylester-Monomer und gegebenenfalls einem weiteren Monomer mit einer ungesättigten C-C-Doppelbindung.

Vorzugsweise beträgt der Hydrolysegrad in Mol-% im Co-Polymer **PA** ≥90 Mol-%, insbesondere ≥95 Mol-%, am meisten bevorzugt ≥99 Mol-%.

Mögliche Vinylester-Monomere sind ausgewählt aus der Liste bestehend aus Vinylformat, Vinylacetat, Vinylpropionat, Vinylvalerat, Vinylbutyrat, Vinylisobutyrat, Vinylpivalat, Vinylcaprat, Vinyllaurat, Vinylstearat, Vinylbenzoat und Vinylversatat. Vorzugsweise handelt es sich um Vinylacetat.

Vorzugsweise beträgt der Anteil in Mol-% von Ethylen im Co-Polymer **PA** 20 - 50 Mol-%, insbesondere 25 - 40 Mol-%, am meisten bevorzugt 29 - 38 Mol-%. Es ist dem Fachmann klar, dass es sich dabei um Ethylen in seinem im Co-Polymer **PA** einpolymerisierten Zustand handelt.

Vorzugsweise beträgt der Anteil in Mol-% von Vinylalkohol im Co-Polymer **PA** 80 - 50 Mol-%, insbesondere 75 - 60 Mol-%. Es ist dem Fachmann klar, dass es sich dabei um Vinylalkohol in seinem im Co-Polymer **PA** einpolymerisierten Zustand handelt.

Weiter kann es vorteilhaft sein, wenn das Co-Polymer **PA** zusätzlich ein weiteres Monomer aufweist. Vorzugsweise beträgt der Anteil in Mol-% des weiteren Monomers im Co-Polymer **PA** 0.1 - 30 Mol-%. Es ist dem Fachmann klar, dass es sich dabei um ein Monomer in seinem im Co-Polymer **PA** einpolymerisierten Zustand handelt.

Vorzugsweise beträgt die Dichte des Co-Polymer **PA** 1.25 - 1.1 g/cm³, insbesondere 1.21 - 1.17 g/cm³.

Vorzugsweise beträgt der Schmelzpunkt des Co-Polymer **PA**, gemessen mit DSC, 150 - 200 °C, insbesondere 170 - 190 °C.

Vorzugsweise beträgt die Glasüberganstemperatur des Co-Polymer **PA,** gemessen mit DSC, 50 - 70 °C, insbesondere 55 - 65 °C.

Bevorzugte Co-Polymere **PA** sind beispielsweise kommerziell erhältlich unter dem Namen Soarnol® von The Nippon Synthetic Chemical Industry Co., Ltd.

Vorzugswiese besteht die Sperrschicht **S1** zu mehr als 80 Gew.-%, insbesondere bevorzugt zu mehr als 95 Gew.-%, aus Co-Polymer **PA**, bezogen auf das Gesamtgewicht der Sperrschicht **S1**.

Die Sperrschicht **S1** weist vorteilhaft eine Schichtdicke im Micrometerbereich auf, typischerweise zwischen 100 und 1µm, bevorzugt zwischen 10 und 2 µm.

Die Ethylen-Vinylalkohol-Schicht 4 der Sperrschicht **S1** 31 ist mit der Schottschicht 2 durch eine Polyurethan-Schicht 5 verbunden. Die Polyurethan-Schicht 5 besteht zu mehr als 10 Gew-% aus Polyurethan **PUR**, bezogen auf das Gesamtgewicht der Polyurethan-Schicht 5, insbesondere zu mehr als 20 Gew-%, insbesondere bevorzugt zu mehr als 40 Gew-%.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen wie beispielsweise Additionen oder Substitutionen von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Vorzugsweise ist das Polyurethan **PUR** ein Polyester-Polyurethan oder ein Poly(meth)acrylat **PAC**.

Polyurethane **PUR**, welche mindestens eine nucleophile Gruppe aufweisen, sind insbesondere herstellbar aus mindestens einem Polyisocyanat und mindestens einem Polyol sowie mindestens einem Monomer **M1**, welches wenigstens eine Isocyanatgruppe oder eine gegenüber Isocyanatgruppen reaktive Gruppe und darüber hinaus mindestens eine nucleophile funktionelle Gruppe aufweist.

Als Polyisocyanate können handelsübliche aliphatische, cycloaliphatische oder aromatische Polyisocyanate, insbesondere Diisocyanate, verwendet werden.

Als Polyole eignen sich insbesondere Polyester- oder Polyetherpolyole, bevorzugt Polyester- oder Polyetherdiole. Weiterhin eignen sich als Polyole niedrigmolekulare zwei- oder mehrwertige Alkohole wie beispielsweise 1,2-Ethandiol, 1,3- und 1,4-Butandiol, 1,2- und 1,3-Propandiol, Neopentylglykol, Diethylenglykol, Triethylenglykol, die isomeren Dipropylenglykole und Tripropylenglykole, die isomeren Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten.

Geeignete Monomere **M1** weisen vorzugsweise mindestens eine Carboxylgruppe und/oder eine Sulfonatgruppe auf. Vorzugsweise handelt es sich beim Monomer **M1** um eine Aminocarbonsäure, eine Hydroxycarbonsäure, insbesondere eine Dihydroxyalkylcarbonsäure, wie beispielsweise Dimethylolpropionsäure oder eine dazu strukturähnliche Diolcarbonsäure, oder um eine NCO-reaktive Gruppen aufweisende Sulfonsäure wie beispielsweise eine Dihydroxysulfonsäure. Bevorzugt ist das Monomer **M1**, welches eine Sulfonatgruppe aufweist, das Natriumsalz der N-(2-Aminoethyl)-2-aminoethan-sulphonsäure.

Es hat sich gezeigt, dass besonders geeignete Polyurethane solche sind, wie sie beispielsweise als "Polymer (PII)" in DE 100 00 656 A1 oder WO 01/34559 A1, oder als "Polyurethan" in DE 195 21 500 A1 beschrieben sind.

Poly(meth)acrylate **PAC**, welche mindestens eine nucleophile Gruppe aufweisen, sind insbesondere herstellbar aus mindestens einem (Meth)acrylat-monomer sowie mindestens einem Monomer **M2**, welches mit dem (Meth)acrylatmonomer polymerisierbar ist und darüber hinaus mindestens eine nucleophile funktionelle Gruppe aufweist. Beispielsweise sind derartige Poly(meth)acrylate Co-Polymere aus mindestens einem (Meth)acrylatmonomer und mindestens einer ungesättigten Carbonsäure, insbesondere (Meth)acrylsäure, Maleinsäure, Fumarsäure, Crotonsäure oder dergleichen, einem (Meth)acrylamid oder einem (Meth)acrylsäureester, welcher eine Hydroxylgruppe aufweist, insbesondere Hydroxyalkyl(meth)acrylat wie Hydroxybutylacrylat (HBA), Hydroxybutylmethacrylat (HBMA), Hydroxypropylacrylat (HPA), Hydroxypropylmethacrylat (HPMA), Hydroxyethylacrylat (HEA) oder Hydroxyethylmethacrylat (HEMA), oder ein Teilester eines Polyols, bevorzugt Glycerin oder Trimethylolpropan, mit (Meth)acrylsäure.

Vorzugsweise handelt es sich um Polyurethane **PUR**, mit einem Molekulargewicht von 10'000 - 500'000 g/mol.

Die Polyurethan-Schicht 5 weist vorteilhaft eine Schichtdicke im Micrometerbereich auf, typischerweise zwischen 10 und 0.1 µm, bevorzugt zwischen 5 und 0.2 µm, insbesondere bevorzugt zwischen 4 und 0.5 µm

Figur 2 zeigt einen Querschnitt durch eine mögliche erfindungsgemässe Membran, welche eine Sperrschicht **S2** 32 aufweist.

Im Falle einer Sperrschicht **S2** 32 handelt es sich um eine Sperrschicht bestehend aus einer Zusammensetzung umfassend 5-50 Gew.-%, vorzugsweise 5-20 Gew.-%, Polyurethan **PUR** und 50-95 Gew.-%, vorzugsweise 80-95 Gew.-%, Co-Polymer **PA**.

Bei dem Polyurethan **PUR** und dem Co-Polymer **PA** handelt es sich um Polyurethan **PUR** und Co-Polymer **PA**, wie sie vorgehend beschrieben wurden. Weiter sind als Polyurethan **PUR** und Co-Polymer **PA** solche bevorzugt, wie sie vorgehend als bevorzugtes Polyurethan **PUR** und Co-Polymer **PA** erwähnt wurden.

Die Sperrschicht **S2** 32 weist vorteilhaft eine Schichtdicke im Micrometerbereich auf, typischerweise zwischen 100 und 1 µm, bevorzugt zwischen 10 und 2 µm.

Vorzugswiese besteht die Sperrschicht **S2** 32 zu mehr als 90 Gew.-%, insbesondere bevorzugt zu mehr als 98 Gew.-%, aus der Summe von Co-Polymer **PA** zusammen mit Polyurethan **PUR**, bezogen auf das Gesamtgewicht der Sperrschicht **S2**.

Es ist weiter von Vorteil, wenn es sich bei Membran 1 um eine flexible Membran, insbesondere um eine flexible Bahn, handelt. Diese kann einfach gerollt und somit einfach gelagert, beziehungsweise transportiert, werden. So gelangt die Membran einfach auf die Baustelle und kann dort abgerollt und auf die benötigten Dimensionen abgeschnitten werden.

In einem weiteren Aspekt umfasst die Erfindung auch ein Verfahren zur Herstellung einer Membran 1 umfassend eine Schottschicht 2, wobei die Schottschicht zu mehr als 50 Gew-% aus PVC besteht, bezogen auf das Gesamtgewicht der Schottschicht. Die Membran umfasst weiter eine Sperrschicht **S1** 31, wobei die Sperrschicht eine Polyvinylalkohol-Schicht 4 umfassend mehr als 50 Gew-% Co-Polymer **PA**, bezogen auf das Gesamtgewicht der Polyvinylalkohol-Schicht 4, aufweist, welche mit der Schottschicht 2 durch eine Polyurethan-Schicht 5 verbunden ist. Die Polyurethan-Schicht 5 besteht zu mehr als 10 Gew-% aus Polyurethan **PUR**, bezogen auf das Gesamtgewicht der Polyurethan-Schicht 5. Das Verfahren umfasst die Schritte;
(i) Applizieren einer Polyurethandispersionszusammensetzung **PD** auf eine Schottschicht 2;
(ii) Ablüften der Polyurethandispersionszusammensetzung **PD** unter Bildung einer Polyurethan-Schicht 5;
(iii) Bilden einer Polyvinylalkohol-Schicht 4 auf der Polyurethan-Schicht 5.

Vorzugsweise finden die Schritte in der zeitlichen Reihenfolge Schritt (i), gefolgt von Schritt (ii), gefolgt von Schritt (iii) statt.

Das Polyurethan **PUR**, das Co-Polymer **PA**, die Schottschicht 2, die Sperrschicht **S1** 31, die Polyvinylalkohol-Schicht 4 und die Polyurethan-Schicht 5 wurden vorgehend schon beschrieben. Als Polyurethan **PUR**, Co-Polymer **PA**, Schottschicht 2, Sperrschicht **S1** 31, Polyvinylalkohol-Schicht 4 und Polyurethan-Schicht 5 geeignet und bevorzugt sind solche, die vorgehend als geeignete und bevorzugte Polyurethan **PUR**, Co-Polymer **PA**, Schottschicht 2, Sperrschicht **S1** 31, Polyvinylalkohol-Schicht 4 und Polyurethan-Schicht 5 erwähnt sind.

Unter "Ablüften" wird im gesamten Dokument ein Abtrocknen einer Polyurethandispersionszusammensetzung nach der Applikation derselben verstanden, wobei das Lösungsmittel oder das Dispersionsmittel ganz oder zumindest hauptsächlich, verdunstet.

Das Ablüften kann durch Abdunsten an Luft mit und ohne Ablüftemittel erfolgen. Als Ablüftemittel kann beispielsweise ein Gebläse, insbesondere ein Luftgebläse, dienen. Bevorzugt wird ein Ablüftemittel eingesetzt. Das Ablüften kann bei Raumtemperatur oder bei erhöhter Temperatur erfolgen.

Vorzugsweise erfolgt das Ablüften der Polyurethandispersionszusammensetzung (**PD**) in Schritt (ii) für 1-5 min bei 100-170°C.

Die Polyurethandispersionszusammensetzung **PD** ist typischerweise eine Dispersion von Polyurethan **PUR** in einer flüssigen Phase, wobei das Polyurethan **PUR** als Feststoff vorliegt. Die flüssige Phase ist vorzugsweise Wasser.

Vorzugsweise weist die Polyurethandispersionszusammensetzung **PD** in Schritt (ii) eine dispergierte Phase bestehend aus Polyurethan **PUR** sowie eine flüssige Phase, insbesondere Wasser, auf.

Es ist weiter vorteilhaft, wenn das Polyurethan **PUR** der dispergierten Phase ein nichtreaktives Polyurethan ist.

Typischerweise beträgt der Anteil der dispergierten Phase 0.1-90 Gew.-%, bezogen auf das Gesamtgewicht der Polyurethandispersionszusammensetzung **PD**. Vorzugsweise beträgt der Anteil der dispergierten Phase 30-60 Gew.-%, bezogen auf das Gesamtgewicht der Polyurethandispersionszusammensetzung **PD**.

Die Polyurethandispersionszusammensetzung **PD** ist vorzugsweise eine wässrige Polyurethandispersion, wobei das Polyurethan **PUR** als Feststoff vorliegt und der Anteil des Polyurethan **PUR** vorzugsweise 15 bis 55 Gew.-%, insbesondere 25 bis 50 Gew.-%, bevorzugt 35 bis 45 Gew.-%, bezogen auf das Gesamtgewicht der Polyurethandispersionszusammensetzung **PD**, beträgt.

Das Bilden der Sperrschicht **S1** 31 in Schritt (iii) erfolgt vorzugsweise durch Applizieren von einer Zusammensetzung **Z2** in flüssigem Zustand bestehend aus Co-Polymer **PA** und einem Lösungsmittel auf die Polyurethan-Schicht 5.

Das Lösungsmittel ist typischerweise ausgewählt aus der Gruppe bestehend aus Wasser, Ethanol, Methanol, Ethanol, Propan-1-ol, Butan-1-ol, Propan-2-ol, Butan-2-ol, Ethan-1,2-diol, 1,2-Propandiol, Propan-1,3-diol, Butan-1,2-diol, Butan-1,3-diol, 1,4-Butandiol, 2,3-Butandiol, Pentan-1,5-diol und Prop-2-en-1-ol.

Vorzugsweise handelt es sich bei dem Lösungsmittel um ein Propan-1-ol/Wasser Gemisch, bevorzugt beträgt das Gewichtsverhältnis von Propan-1-ol : Wasser von 99 : 1 bis 1 : 99, insbesondere bevorzugt von 5 : 1 bis 3 : 1.

Es ist weiter vorteilhaft, wenn nach dem Applizieren von der Zusammensetzung **Z2** in flüssigem Zustand die applizierte Zusammensetzung **Z2** für 1- 5 min bei 100-170°C erwärmt wird. Dies ist dahingehend von Vorteil, dass dies der Bildung einer homogenen und lückenlosen Sperrschicht **S1** zuträglich ist.

Weiter ist es für die Hemmung der Weichmachermigration vorteilhaft, wenn die Zusammensetzung **Z2** einen Anteil von 1-25 Gew.-% Co-Polymer **PA**, insbesondere bevorzugt 15-20 Gew.-%, bezogen auf das Gesamtgewicht der Zusammensetzung **Z2**, aufweist.

Vorzugsweise beträgt bei der Zusammensetzung **Z2** das Gewichtsverhältnis von Co-Polymer **PA** zu Lösungsmittel von 1:100 bis 1:4, insbesondere von 1:10 bis 1:5.

In einem weiteren Aspekt umfasst die Erfindung auch ein weiteres Verfahren zur Herstellung einer Membran 1 umfassend eine Schottschicht 2, wobei die Schottschicht zu mehr als 50 Gew-% aus PVC besteht, bezogen auf das Gesamtgewicht der Schottschicht.

Die Membran umfasst weiter eine Sperrschicht **S2** 32, wobei die Sperrschicht **S2** 32 aus einer Zusammensetzung umfassend 5-50 Gew.-%, vorzugsweise 5-20 Gew.-%, Polyurethan **PUR** und 50-95 Gew.-%, vorzugsweise 80-95 Gew.-%, Co-Polymer **PA** besteht, umfassend die Schritte;
(i') Applizieren einer Zusammensetzung **Z1** umfassend Polyurethan **PUR**, Co-Polymer **PA** und Lösungsmittel auf eine Schottschicht 2;
(ii') Ablüften der Zusammensetzung **Z1** unter Bildung einer Sperrschicht **S2** 32;

Vorzugsweise finden die Schritte in der zeitlichen Reihenfolge Schritt (i'), gefolgt von Schritt (ii') statt.

Das Polyurethan **PUR**, das Co-Polymer **PA**, die Schottschicht 2 und die Sperrschicht **S2** 32 wurden vorgehend schon beschrieben. Als Polyurethan **PUR**, Co-Polymer **PA**, Schottschicht 2 und Sperrschicht **S2** 32 geeignet und bevorzugt sind solche, die vorgehend als geeignete und bevorzugte Polyurethan **PUR**, Co-Polymer **PA**, Schottschicht 2 und Sperrschicht **S2** 32 erwähnt sind.

Es ist weiter vorteilhaft, wenn das Applizieren der Zusammensetzung **Z1** in Schritt (i') durch Applizieren der Zusammensetzung **Z1** in flüssigem Zustand erfolgt. Vorzugsweise beträgt die Viskosität der Zusammensetzung **Z1** bei 25°C gemessen nach: DIN EN ISO 3219/A.3 500 -30000 mPas.

Ferner ist es ist vorteilhaft, wenn das Ablüften der Zusammensetzung **Z1** in Schritt (ii') für 1-5 min bei 100-170°C erfolgt.

Das Lösungsmittel der Zusammensetzung **Z1** ist typischerweise ausgewählt aus der Gruppe bestehend aus Wasser, Ethanol, Methanol, Ethanol, Propan-1-ol, Butan-1-ol, Propan-2-ol, Butan-2-ol, Ethan-1,2-diol, 1,2-Propandiol, Propan-1,3-diol, Butan-1,2-diol, Butan-1,3-diol, 1,4-Butandiol, 2,3-Butandiol, Pentan-1,5-diol und Prop-2-en-1-ol.

Vorzugsweise handelt es sich bei dem Lösungsmittel um ein Propan-1-ol/Wasser Gemisch, bevorzugt beträgt das Gewichtsverhältnis von Propan-1-ol : Wasser von 99 : 1 bis 1 : 99, insbesondere bevorzugt von 5 : 1 bis 3 : 1.

Es ist weiter vorteilhaft, wenn der Anteil der Summe von Polyurethan **PUR** zusammen mit Co-Polymer **PA** 1-30 Gew.-%, insbesondere 15-25 Gew.-%, bezogen auf das Gesamtgewicht der Zusammensetzung **Z1**, beträgt.

Die derart hergestellte Membran 1 kann nun je nach Bedarf abgelängt, abgeschnitten, aufgerollt oder direkt weiterverarbeitet werden. Die Rollen mit der Membran können je nach Bedarf gelagert oder transportiert werden.

Ein weiterer Aspekt der vorliegenden Erfindung betrifft die Verwendung der vorgängig im Detail beschriebenen Abdichtungsmembran 1 zur Abdichtung von Untergründen.

Die Membran 1 wird typischerweise als vorgefertigte Bahn verwendet. In diesem Fall wird die Membran vorzugsweise durch einen industriellen Prozess in einem Folienwerk gefertigt und gelangt auf der Baustelle vorzugsweise in Form von einer Membran ab einer Rolle zum Einsatz. Die Membran kann jedoch auch in Form von Steifen mit einer Breite von typischerweise 1 - 20 cm zum Einsatz kommen, beispielsweise um Verbindungsstellen zwischen zwei Dachbahnen abzudichten. Weiter kann die Membran auch in Form von flächigen Körpern zur Reparatur von schadhaften Stellen in Abdichtungen, beispielsweise Dachbahnen, vorliegen und verwendet werden.

Eine bevorzugte Verwendung der Membran 1 ist daher eine Verwendung zum Abdichten gegen Feuchtigkeit von Bauten im Hoch- und Tiefbau, insbesondere von Dächern und Böden.

In einem weiteren Aspekt betrifft die vorliegende Erfindung einen Formkörper, dessen Oberfläche eine Membran 1 aufweist, wobei die Membran mit ihrer der Schottschicht 2 abgewanden Seite an dem Formkörper angeordnet ist. Bei dem Formkörper handelt es sich typischerweise um ein Gebilde des Hoch- oder Tiefbaus. Unter dem Begriff "Formkörper" wird ein Gegenstand mit einer dreidimensionalen Ausdehnung bezeichnet.

### Beispiele

### Herstellung der Zusammensetzungen Za und Zb

Als Komponente Co-Polymer **PA** der Zusammensetzungen ***Za*** und ***Zb*** diente Soarnol D2908 oder Soarnol D3808, kommerziell erhältlich von der Firma Nippon Gohsei, Japan. Als Komponente Lösungsmittel diente Wasser und n-Propanol. Die beiden Komponenten wurden in den in Tabelle 1 angegebenen Mengen miteinander zu den Zusammensetzungen ***Za*** und ***Zb*** in den in Tabelle 1 angegebenen Gewichtsteilen vermischt.

**Tabelle 1, Zusammensetzungen Za und Zb.**

| | ***Za*** | ***Zb*** |
|---|---|---|
| Soarnol D2908 | 20 | - |
| Soarnol D3808 | - | 20 |
| Wasser | 16 | 16 |
| n-Propanol | 64 | 64 |
| Summe der Gew.-teile | 100 | 100 |

### Herstellung der Polyurethandispersionszusammensetzungen (PD)

Es wurden die in Tabelle 2 aufgeführten Verbindungen in den in Tabelle 2 angegebenen Gewichtsteilen miteinander zu den Polyurethandispersionszusammensetzungen ***PD1*** und ***PD2*** vermischt. Als Polyurethane **PUR** wurden verwendet: Incorez® W2400 (beide INCOREZ LTD, Grossbritanien) sowie Bayhydrol® UH 2606 (Bayer Material Science, Deutschland). Bei dem Filmbildungsadditiv handelt es sich um einen Tripropylenglykol-n-butylether, beim der flüssigen Phase handelt es sich um Wasser, als Netzmittel diente eine Siloxanverbindung und als Thixotropiermittel wurde hydrophobe pyrogene Kieselsäure verwendet.

**Tabelle 2, Polyurethandispersionszusammensetzungen PD1 und PD2,**

| | ***PD1*** | ***PD2*** |
|---|---|---|
| **PUR** | | |
| Incorez W2400 | 71.4** | - |
| Bayhydroll XP 2606 | - | 94.3* |
| **Filmbildungsadditiv** | 10 | 0.5 |
| **Wasser** | 16.6 | 3.7 |
| **Netzmittel** | 2 | 1.5 |
| **Thixotropiermittel** | - | - |
| Summe der Gew.-teile | 100 | 100 |

| | | |
|---|---|---|
| *die 94.3 Gewichtsteile beziehen sich auf eine 35 %-ige Dispersion von Polyurethan **PUR** in Wasser, **die 71.4 Gewichtsteile beziehen sich auf eine 40 %-ige Dispersion von Polyurethan **PUR** in Wasser. | | |

### Herstellung der Schottschicht

Es wurde eine Zusammensetzung bestehend aus:
PVC (55 Gew.-%, bezogen auf das Gesamtgewicht der Zusammensetzung), Weichmacher, Diisononyl-phthalate von Sigma-Aldrich, Schweiz (39 Gew.-%, bezogen auf das Gesamtgewicht der Zusammensetzung), Stabilisator, Zinn-Stabilizator Dibutyltin-diacetate von Sigma-Aldrich, Schweiz (1 Gew.-%, bezogen auf das Gesamtgewicht der Zusammensetzung), CaCO₃ von Sigma-Aldrich, Schweiz (5 Gew.-%, bezogen auf das Gesamtgewicht der Zusammensetzung), durch Flachdüsenextrusion zu einer 1.5 mm dicken Folie geformt.

### Prüfung auf Weichmachermigration

Aus den Membranen wurden Probenkörper mit den Dimensionen 120 mm x 120 mm hergestellt und gewogen (Gewicht dO). Anschliessend wurden diese Probenkörper auf einen Körper mit den Dimensionen 120mm x 120 mm und einer Dicke von ca. 40-50 mm aus EPS (Expandierter Polystyrol-Hartschaum) gelegt. Auf dem Probenkörper wurde weiter eine Glasplatte mit den Dimensionen 100 mm x 100 mm und darauf ein Gewicht von 2 kg angeordnet. Diese Anordnung wurde bei 70 °C, 50±5% relative Luftfeuchtigkeit) für 28 Tage gelagert. Danach wurden die Probenkörper erneut gewogen (Gewicht d28) und der Gewichtsunterschied in Prozent vom Gewicht dO bestimmt.

### Herstellung Vergleichsmembranen (Ref.2, Ref.3)

Die jeweiligen Zusammensetzung **Za** (für ***Ref.2***) und **Zb** (für ***Ref.3***) wurden zur Bildung einer Polyvinylalkoholschicht mittels eines Rakelauftragsgerätes (K-CONTROL-COATER-System K 202, ERICHSEN, Deutschland) in einer Schichtdicke von 24 µm bei einer Temperatur von 30 °C auf eine Schottschicht von 20cm x 30cm x 1.5mm, deren Herstellung vorgehend beschrieben wurde, appliziert und 2 Minuten bei einer Temperatur von 160 °C in einem Ofen erwärmt.

### Herstellung erfindungsgemässer Membrane umfassend eine Schottschicht S1 (Exp.1, Exp.2)

Die Polyurethandispersion *PD1* wurde für ***Exp.1*** und ***Exp.2*** mittels eines Rakelauftragsgerätes (K-CONTROL-COATER-System K 202, ERICHSEN, Deutschland) in einer Schichtdicke von 4 µm auf eine Schottschicht von 20cm x 30cm x 1.5mm, deren Herstellung vorgehend beschrieben wurde, aufgetragen. Die Filme wurden 2 Minuten bei einer Temperatur von 160 °C in einem Ofen erwärmt. Unmittelmar danach wurde die entsprechende Zusammensetzung ***Za*** (für ***Exp.1**), **Zb*** (für ***Exp.2**)* mittels des vorgehend genannten Rakelauftragsgerätes zur Bildung einer Polyvinylalkoholschicht in einer Schichtdicke von 24 µm bei einer Temperatur von 30 °C auf die Schottschicht appliziert und 2 Minuten bei einer Temperatur von 160 °C in einem Ofen erwärmt.

### Herstellung erfindungsgemässer Membrane umfassend eine Schottschicht S2 (Exp.3, Exp.4)

80 Gewichtsteile der vorgehend beschriebenen Zusammensetzung ***Za*** (für ***Exp.3***), respektive ***Zb*** (für ***Exp**.**4***), wurden mit 20 Gewichtsteilen der vorgehend beschriebenen Polyurethandispersionen ***PD1*** gemischt und mittels eines Rakelauftragsgerätes (K-CONTROL-COATER-System K 202, ERICHSEN, Deutschland) in einer Schichtdicke von 24 µm (Schichtdicke unmittelbar nach dem Auftragen) auf eine Schottschicht von 20cm x 30cm x 1.5mm, deren Herstellung vorgehend beschrieben wurde, aufgetragen. Die Filme wurden 2 Minuten bei einer Temperatur von 160 °C in einem Ofen erwärmt (Schichtdicke nach dem Erwärmen betrugt 4-6 µm).

### Weichmachermigrationstest

Eine unbehandelte Schottschicht ***Ref.1**,* eine Vergleichsmembrane mit einer Polyvinylalkoholschicht der Zusammensetzung **Za** ***(Ref.2)**,* eine Vergleichsmembrane mit einer Polyvinylalkoholschicht der Zusammensetzung ***Zb** (**Ref**.**3**),zwei* erfindungsgemässe Membranen mit einer Schottschicht **S1** *(**Exp.1**, **Exp.2**)* sowie zwei erfindungsgemässe Membranen mit einer Schottschicht **S2** *(**Exp.3**, **Exp.4**)* wurden dem vorgehend beschriebenen Weichmachermigrationstest unterzogen.

Die Gewichtsverluste in Gew.-% sind in Tabelle 3 ersichtlich.

**Tabelle 3, Gewichtsverluste der Membranen im Weichmachermigrationstest in Gew.-%**

| Membran | Gewichtsverluste in Gew.-% |
|---|---|
| ***Ref.1*** | 5.60% |
| ***Ref.2*** | 0.47% |
| ***Ref.3*** | 0.38% |
| ***Exp.1*** | 0.42% |
| ***Exp.2*** | 0.33% |
| ***Exp.3*** | 0.52% |
| ***Exp.4*** | 0.37% |

Es wurden Weichmachermigrationstest mit Membranen gemacht, die den erfindungsgemässen Membranen ***Exp.1, Exp.2**, **Exp.3**,* und ***Exp.4*** entsprechen, bei welchen jedoch ***PD1*** durch ***PD2*** ersetzt wurde. Es wurden dieselben Gewichtsverluste in Gew.-% der Membranen im Weichmachermigrationstest festgestellt wie sie in Tabelle 3 unter Verwendung von ***PD1*** gefunden wurden.

### Prüfung auf Alterung

Aus den vorgenannten erfindungsgemässen Membranen sowie den Membranen ***Ref.2**,* und ***Ref.3*** wurden Probenkörper mit den Dimensionen 20 cm x 10 cm hergestellt. Die Probenkörper wurden für 28 Tage bei einer Temperatur von 70±2 °C in einem Umluftofen gelagert. Danach wurden die Probenkörper 20 x in der Mitte gebogen und aufeinander gefaltet und anschliessend das Ablösen der Sperrschicht der Membran visuell beurteilt. Die erfindungsgemässen Membran zeigten, im Gegensatz zu den Membranen ***Ref.2**,* und ***Ref.3**,* keine Delamination der Sperrschicht **S1**, respektive **S2**.

### Bezugszeichenliste

- 1: Membran
- 2: Schottschicht
- 3: Sperrschicht
- 31: Sperrschicht **S1**
- 32: Sperrschicht **S2**
- 4: Polyvinylalkohol-Schicht
- 5: Polyurethan-Schicht

## Patentansprüche

1. Membran (1) umfassend eine Schottschicht (2), wobei die Schottschicht zu mehr als 50 Gew-% aus PVC besteht, bezogen auf das Gesamtgewicht der Schottschicht, und eine Sperrschicht (3), wobei es sich bei der Sperrschicht (3):
entweder um eine Sperrschicht **S1** (31) handelt, wobei die Sperrschicht **S1** (31) eine Polyvinylalkohol-Schicht (4) umfassend mehr als 50 Gew-% Co-Polymer **PA**, bezogen auf das Gesamtgewicht der Polyvinylalkohol -Schicht (4), aufweist, welche mit der Schottschicht (2) durch eine Polyurethan-Schicht (5) verbunden ist, wobei die Polyurethan-Schicht (5) zu mehr als 10 Gew-% aus Polyurethan **PUR** besteht, bezogen auf das Gesamtgewicht der Polyurethan-Schicht (5); oder
um eine Sperrschicht **S2** (32) handelt, wobei die Sperrschicht **S2** (32) aus einer Zusammensetzung umfassend 5-50 Gew.-% Polyurethan **PUR** und 50-95 Gew.-% Co-Polymer **PA** besteht;
und wobei das Polyurethan **PUR** mindestens eine nucleophile funktionelle Gruppe aufweist, welche ausgewählt ist aus der Gruppe bestehend aus Hydroxylgruppe, Carboxylgruppe, Sulfonatgruppe und Phosphatgruppe, und wobei es sich bei dem Co-Polymer **PA** um ein Ethylen-Vinylalkohol-Co-Polymer handelt.

2. Membran (1) gemäss Anspruch 1, **dadurch gekennzeichnet, dass** der Anteil in Mol-% von Ethylen im Co-Polymer **PA** 20 - 50 Mol-%, insbesondere 25 - 40 Mol-%, am meisten bevorzugt 29 - 38 Mol-% beträgt.

3. Membran (1) gemäss Anspruch 1 oder 2, **dadurch gekennzeichnet, dass** das Polyurethan **PUR** hergestellt ist aus mindestens einem Polyisocyanat und mindestens einem Polyol sowie mindestens einem Monomer **M1**, wobei das Monomer **M1** mindestens eine nucleophile funktionelle Gruppe aufweist und das das Monomer **M1** mindestens eine Isocyanatgruppe oder eine gegenüber Isocyanatgruppen reaktive Gruppe aufweist.

4. Membran (1) gemäss Anspruch 3, **dadurch gekennzeichnet, dass** das Monomer **M1** als nucleophile funktionelle Gruppe eine Carboxylgruppe und/oder eine Sulfonatgruppe aufweist.

5. Membran (1) gemäss Anspruch 3 oder 4, **dadurch gekennzeichnet, dass** es sich bei dem Monomer **M1** um eine Aminocarbonsäure, eine Hydroxycarbonsäure, insbesondere eine Dihydroxyalkylcarbonsäure, handelt.

6. Verfahren zur Herstellung einer Membran (1), umfassend eine Schottschicht (2), wobei die Schottschicht zu mehr als 50 Gew-% aus PVC besteht, bezogen auf das Gesamtgewicht der Schottschicht, und eine Sperrschicht **S1** (31), wobei die Sperrschicht eine Polyvinylalkohol - Schicht (4) umfassend mehr als 50 Gew-% Co-Polymer **PA,** bezogen auf das Gesamtgewicht der Polyvinylalkohol -Schicht (4), aufweist, welche mit der Schottschicht (2) durch eine Polyurethan-Schicht (5) verbunden ist, wobei die Polyurethan-Schicht (5) zu mehr als 10 Gew-% aus Polyurethan **PUR** besteht, bezogen auf das Gesamtgewicht der Polyurethan-Schicht (5);
umfassend die Schritte;
(i) Applizieren einer Polyurethandispersionszusammensetzung **PD** auf eine Schottschicht (2);
(ii) Ablüften der Polyurethandispersionszusammensetzung **PD** unter Bildung einer Polyurethan-Schicht (5);
(iii) Bilden einer Polyvinylalkohol -Schicht (4) auf der Polyurethan-Schicht (5);
und wobei das Polyurethan **PUR** mindestens eine nucleophile funktionelle Gruppe aufweist, welche ausgewählt ist aus der Gruppe bestehend aus Hydroxylgruppe, Carboxylgruppe, Sulfonatgruppe und Phosphatgruppe, und wobei es sich bei dem Co-Polymer **PA** um ein Ethylen-Vinylalkohol-Co-Polymer handelt.

7. Verfahren gemäss Anspruch 6, **dadurch gekennzeichnet, dass** das Bilden der Sperrschicht **S1** (31) in Schritt (iii) durch Applizieren von einer Zusammensetzung **Z2** in flüssigem Zustand bestehend aus Co-Polymer **PA** und einem Lösungsmittel auf die Polyurethan-Schicht (5) erfolgt.

8. Verfahren gemäss Anspruch 7, **dadurch gekennzeichnet, dass** nach dem Applizieren von der Zusammensetzung **Z2** in flüssigem Zustand die applizierte Zusammensetzung **Z2** für 1- 5 min bei 100-170°C erwärmt wird.

9. Verfahren gemäss einem der Ansprüche 7-8, **dadurch gekennzeichnet, dass** die Zusammensetzung **Z2** einen Anteil von 1-25 Gew.-% Co-Polymer **PA**, bezogen auf das Gesamtgewicht der Zusammensetzung **Z2**, aufweist.

10. Verfahren gemäss einem der Ansprüche 6-9, **dadurch gekennzeichnet, dass** die Polyurethandispersionszusammensetzung (**PD**) in Schritt (ii) eine dispergierte Phase bestehend aus Polyurethan **PUR** sowie ein eine flüssige Phase, insbesondere Wasser, aufweist.

11. Verfahren gemäss Anspruch 10, **dadurch gekennzeichnet, dass** das Polyurethan **PUR** der dispergierten Phase ein nichtreaktives Polyurethan ist.

12. Verfahren zur Herstellung einer Membran (1), umfassend eine Schottschicht (2), wobei die Schottschicht zu mehr als 50 Gew-% aus PVC besteht, bezogen auf das Gesamtgewicht der Schottschicht, und eine Sperrschicht **S2** (32), wobei die Sperrschicht **S2** (32) aus einer Zusammensetzung umfassend 5-50 Gew.-% Polyurethan **PUR** und 50-95 Gew.-% Co-Polymer **PA** besteht, umfassend die Schritte;
(i') Applizieren einer Zusammensetzung **Z1** umfassend Polyurethan **PUR**, Co-Polymer **PA** und Lösungsmittel auf eine Schottschicht (2);
(ii') Ablüften der Zusammensetzung **Z1** unter Bildung einer Sperrschicht **S2** (32);
und wobei das Polyurethan **PUR** mindestens eine nucleophile funktionelle Gruppe aufweist, welche ausgewählt ist aus der Gruppe bestehend aus Hydroxylgruppe, Carboxylgruppe, Sulfonatgruppe und Phosphatgruppe, und wobei es sich bei dem Co-Polymer **PA** um ein Ethylen-Vinylalkohol-Co-Polymer handelt.

13. Verfahren gemäss Anspruch 12, **dadurch gekennzeichnet, dass** das Applizieren der Zusammensetzung **Z1** in Schritt (i') durch Applizieren der Zusammensetzung **Z1** in flüssigem Zustand erfolgt.

14. Verfahren gemäss Anspruch 12 oder 13, **dadurch gekennzeichnet, dass** das Ablüften der Zusammensetzung **Z1** in Schritt (ii') für 1-5 min bei 100-170°C erfolgt.

15. Verfahren gemäss einem der Ansprüche 12-14, **dadurch gekennzeichnet, dass** der Anteil der Summe von Polyurethan **PUR** zusammen mit Co-Polymer **PA** 1-30 Gew.-%, bezogen auf das Gesamtgewicht der Zusammensetzung **Z1**, beträgt.
